**Europäisches Patentamt**

**European Patent Office**

**Office européen des brevets**

(11) Numéro de publication: **0 055 655**
**B1**

(12) **FASCICULE DE BREVET EUROPEEN**

(45) Date de publication du fascicule du brevet: **19.09.84**

(51) Int. Cl.³: **H 04 N 5/32**

(21) Numéro de dépôt: **81402005.3**

(22) Date de dépôt: **15.12.81**

(54) **Dispositif et procédé pour visualiser un corps éclairé par une source de radiations réglable.**

(30) Priorité: **29.12.80 US 220793**

(43) Date de publication de la demande:
**07.07.82 Bulletin 82/27**

(45) Mention de la délivrance du brevet:
**19.09.84 Bulletin 84/38**

(84) Etats contractants désignés:
**DE FR IT NL**

(56) Documents cités:
**DE-A-1 614 580**
**DE-A-3 007 620**
**US-A-4 064 530**
**US-A-4 240 106**

(73) Titulaire: **THOMSON-CSF**
**173, Boulevard Haussmann**
**F-75379 Paris Cedex 08 (FR)**

(72) Inventeur: **McMann, Renville H., Jr.**
**THOMSON-CSF SCPI 173, bld Haussmann**
**F-75360 Paris Cedex 08 (FR)**
Inventeur: **Kreinick, Stephen**
**THOMSON-CSF SCPI 173, bld Haussmann**
**F-75360 Paris Cedex 08 (FR)**
Inventeur: **Novack, Martin M.**
**THOMSON-CSF SCPI 173, bld Haussmann**
**F-75360 PAris Cedex 08 (FR)**

(74) Mandataire: **Barbin le Bourhis, Joel et al**
**THOMSON-CSF SCPI 173, boulevard**
**Haussmann**
**F-75379 Paris Cedex 08 (FR)**

Courier Press, Leamington Spa, England.

## Description

La présente invention concerne un dispositif et un procédé pour visualiser un corps éclairé par une source de radiation réglable.

La présente invention se rapporte à des perfectionnements apportés à la production de l'image d'un corps, c'est-à-dire, à sa "visualisation" et concerne plus particulièrement un appareil et un procédé pour améliorer la visualisation d'un tel corps en réduisant à un minimum la période d'exposition de celui-ci aux radiations utilisées pour réaliser l'image.

Au cours de ces dernières années, des progrès sensibles ont été faits dans les techniques d'examen de l'intérieur du corps en utilisant certaines radiations, telles que les rayons X. Ces radiations pénètrent dans le corps et permettent de déterminer les propriétés de certaines parties internes de celui-ci, notamment, si ces parties sont transparentes aux radiations en question, ou bien si celles-ci les réfléchissent, réaction qui dépend de la nature des radiations et des équipements utilisés. Un grand nombre de ces équipements utilisent des moyens pour convertir les radiations en provenance du corps (qui ont soit traversé celui-ci, soit en ont été réfléchies) en un signal vidéo électronique qui, de son côté, est traité pour obtenir une image, semblable à une image de télévision, de la structure interne du corps. C'est ainsi, par exemple, que dans un système d'examen par rayons X, les rayons X ayant traversé le corps peuvent être détectés et convertis en un signal vidéo en utilisant un détecteur à scintillations et un générateur de signaux vidéo, ce qui permet de faire apparaître les signaux sur un écran en produisant une image en "temps réel" de la structure interne du corps considéré.

Un facteur important, lorsqu'on utilise de telles radiations pour examiner la structure interne d'un corps, est de réduire à un minimum la dose de radiations à laquelle ce corps est exposé, en particulier, lorsqu'il s'agit du corps d'un patient, Les dangers qui s'attachent à l'exposition de certaines radiations sont bien connus, et il est toujours préférable de réduire les risques à un minimum (indépendamment de la nature des radiations utilisées) en écourtant la durée d'exposition du corps que l'on examine. Cet objectif est en même temps compatible avec une économie d'énergie. Toutefois, un facteur antagoniste est celui d'un niveau insuffisant du signal détecté qui peut résulter de l'utilisation d'une source de radiations dont l'intensité est excessivement faible. En effet, un niveau de signal inférieur a pour résultat un plus mauvais rapport signal/bruit et par conséquent, en fin de compte, une image dont la qualité est plus médiocre.

L'un des buts de la présente invention est de réduire à un minimum la dose de radiations à laquelle un corps doit être exposé pour obtenir une image ayant une certaine qualité. Un autre but de l'invention est d'améliorer la représentation vidéo d'images obtenues en utilisant des radiations pénétrantes.

Selon une forme de réalisation de la présente invention, un dispositif pour visualiser la structure interne d'un corps en utilisant des radiations, tel qu'un appareil à rayons X, est utilisé en combinaison avec un montage pour réduire les bruits dans des signaux vidéo. Ce montage de réduction de bruits peut, par exemple, être du type de celui décrit dans le brevet américain n° 4 064 530 où une représentation numérique ou digitale du signal vidéo instantané présent est combinée avec une représentation digitale d'un signal vidéo mémorisé ou retarde provenant de plusieurs trames antérieures pour obtenir un signal vidéo numérique combiné qui est reconverti en une forme analogique avant d'être finalement visualisé. Les "poids" relatifs des signaux actuel et précédent ou antérieur qui sont combinés à chaque instant (c'est-à-dire, pour chaque élément d'image vidéo) est déterminé par un signal de commande de "détection de mouvement". La section de détection de mouvement du montage a pour fonction de comparer la valeur numérique ou digitale (c'est-à-dire, l'amplitude) de l'élément d'image actuel avec sa contre-partie dans le signal vidéo retardé afin de déterminer le degré de "mouvement" à la position considérée de l'image. Lorsque la nouvelle valeur de l'élément d'image est proche de l'ancienne, on considère que le mouvement de cet élément d'image a été faible durant l'intervalle entre les deux dernières trames. Dans un tel cas, le signal de commande du détecteur de mouvement intervient pour "peser" la combinaison mentionnée ci-dessus, de telle manière qu'elle comprend une fraction appréciable des informations relatives à "l'ancienne" image. C'est ainsi, par exemple, qu'on peut combiner les 3/4 des signaux de la trame précédente avec la fraction complémentaire à l'unité (c'est-à-dire, avec 1/4), du "nouveau" signal vidéo actuel. Lorsque, au contraire, l'opération de détection de mouvement révèle une différence sensible entre les valeurs représentatives de l'ancien et du nouvel élément d'image, un "mouvement" sensible est indiqué comme s'étant produit à la position particulière considérée de l'image en train d'être traitée. Dans un tel cas, un signal de détection de mouvement est engendré et est utilisé pour peser lourdement la fraction de la "nouvelle" information vidéo qui a contribué à la formation du signal combiné. C'est ainsi, par exemple, que l'on peut utiliser les 3/4 du "nouveau" signal vidéo avec 1/4 de l'ancien. En fiat, lorsqu'un certain degré prédéterminé de "mouvement" est détecté (dont le seuil est réglable par l'opérateur), le détecteur de mouvement engendre un signal de commande de "contournement" qui fait que des moyens de combinaison n'utilisent que la "nouvelle" information vidéo et rien de l'ancienne. On voit donc que le système de réduction de bruits dans son ensemble intervient pour éliminer les bruits le plus efficacement des parties de l'image dans lesquelles le mouvement est faible ou nul. Par contre, quand un mouvement est apparu dans une partie d'une image, l'introduction des anciennes informations se traduirait par l'apparition d'une zone brouillée ou "floue" dans l'image vidéo finalement projetée, et pour éviter cet inconvénient, la réduction des bruits est automatiquement diminuée ou supprimée dans les parties du champ le l'image vidéo où un mouvement sensible a été détecté. La manière dont cette détection de mouvement est utilisée dans la présente invention sera décrite brièvement ci-après.

Dans l'appareil selon l'invention est prévue une source de radiations réglable qui peut être dirigée vers le corps à examiner. Des moyens sont prévus pour convertir les radiations provenant du corps en un signal vidéo électronique. Des moyens de détection de mouvement répondent à ce signal vidéo en engendrant un signal indicateur de mouvement en fonction de la différence entre le niveau du signal vidéo actuel et d'un signal vidéo antérieur correspondant au même élément d'image de la trame vidéo. Des moyens sont prévus pour engendrer un signal de commande en fonction dudit signal indicateur de mouvement. Ce signal de commande est appliqué à la source de radiations afin de régler son intensité. Des moyens sont aussi prévus pour projeter ou "visualiser" le signal vidéo.

Dans un mode de réalisation préféré de l'invention, les moyens de détection de mouvement comprennent une partie du montage de réduction de bruits qui traite le signal vidéo avant sa visualisation. Dans ce mode de réalisation préféré, les moyens qui engendrent le signal de commande conservent le signal indicateur de mouvement pendant une période de temps appréciable, de préférence, pendant, au moins, une trame vidéo, et engendrent le signal de commande en fonction dudit signal indicateur de mouvement. Dans cette forme de réalisation, le signal de commande peut être utilisé pour régler automatiquement le montage réducteur de bruits, ainsi que pour ajuster automatiquement l'intensité de la source de radiations. Comme on le verra par la suite, ce signal de commande est fonction du mouvement global du corps en train d'être examiné.

Pour bien faire comprendre le fonctionnement de l'invention, on se propose de considérer ci-après les exemples simplifiés suivants: on suppose que le corps examiné est immobile dans le champ de vision et qu'aucune partie de ce corps ne se meut de façon sensible dans ce champ. Dans un tel cas, il est utile de réduire à un minimum le taux de réduction des bruits du signal vidéo. (comme il est décrit plus loin, le montage de réduction de bruits est réglable à un niveau d'atténuation donné des bruits, en modifiant les critères qui déterminent les fractions relatives des signaux vidéo actuel et passé ou antérieur devant être combinées à chaque élément d'image, quand un degré particulier de mouvement est détecté à cet élément d'image particulier). Quand le montage de réduction de bruits opère à son maximum, le signal d'intensité de la source de radiations peut être réglé au niveau le plus bas permettant encore d'obtenir un signal de sortie vidéo de qualité satisfaisante. Le mouvement d'une petite partie du corps dans le champ de vision peut ne pas modifier sensiblement cette situation. Ainsi, bien que la réduction des bruits puisse être diminuée dans les parties de l'image où se produit un mouvement, le rapport signal/bruit peut être satisfaisant dans la majeure partie du champ de vision tant que le "mouvement global ou général" du corps reste faible dans ce dernier.

On suppose maintenant un mouvement général du corps dans le champ de vision, comme ce peut être le cas lorsque le détecteur de rayons X se déplace par rapport au corps ou inversement. Dans un tel cas, si le niveau de réduction des bruits est réglé à un niveau élévé, l'image présentée finalement risque d'être sensiblement brouillée. Pour éviter ce brouillage, la fonction de réduction des bruits peut être réduite ou supprimée. De plus, l'intensité de la source de radiations peut être automatiquement augmentée afin de compenser les pertes qui résultent dans le rapport signal/bruit effectif de l'image finalement projetée de l'affaiblissement de la fonction de réduction des bruits.

Dans la présente invention, l'intensité des raidations est auto matiquement réglée en fonction du mouvement global du corps par rapport au détecteur. Lorsque le mouvement détecté pendant un période de temps donnée (de préférence, pendant une ou plusieurs trames vidéo) est faible ou nul, la fonction de réduction de bruits est réglée à son maximum et l'intensité de la source de radiations est minimisée. Par contre, lorsqu'un mouvement appréciable est détecté pendant la période de temps donnée, l'intensité de la source de radiations est maximisée et la fonction de réduction de bruits est réglée à minimum.

L'invention concerne plus particulièrement un appareil pour visualiser un corps éclairé par une source de radiation réglable (30) comportant des moyens (40) pour détecter les radiations reçues par le corps (20); des moyens (50) pour convertir les radiations ainsi détectées en un signal vidéo électronique, caractérisé en ce qu'il comporte en outre: un montage de réduction de bruit (60) associé à des moyens de visualisation (70) et incluant des moyens pour conserver ou mémoriser des signaux vidéo, des moyens de détection de mouvement répondant aux signaux vidéo actuels et aux signaux vidéo antérieurs en engendrant des signaux indicateurs de mouvements en fonction des différences entre les niveaux desdits signaux vidéo actuels et antérieurs à certaines positions élémentaires de la trame vidéo et des moyens pour combiner des fractions des signaux vidéo actuels et des signaux vidéo antérieurs, ces fractions étant fonction desdits signaux indicateurs de mouvement, ce montage de réduction de bruit (60) coopérant avec un circuit de traitement (100), qui en réponse auxdits signaux indicateurs de mouvement engendre, en fonction de ceux-ci un premier et un second signal de sortie (100a) et (100b) destinés respectivement à être appliqués à la source de radiation (30) et au montage de réduction de bruit (60); un circuit (80) assurant la synchronisation entre le montage (60), le circuit de traitement (100) et les moyens de visualisation (70). D'autres caractéristiques et avantages de l'invention ressortiront de la description qui va suivre, donnée uniquement à titre d'exemple nullement limitatif, en référence au dessin annexé, dans lequel:

la figure 1 est un schéma par blocs d'un appareil conforme à l'invention qui peut être utilisé pour la mise en pratique du procédé qui en fait l'objet;

la figure 2 est un schéma par blocs généralisé d'un réducteur de bruits vidéo numérique de la technique antérieure;

la figure 3 est un schéma par blocs d'une partie d'un réducteur de bruits vidéo numérique de la technique antérieure, y compris de sa section de détection de mouvement; et,

la figure 4 est un schéma par blocs d'une partie des circuits de traitement de la figure 1.

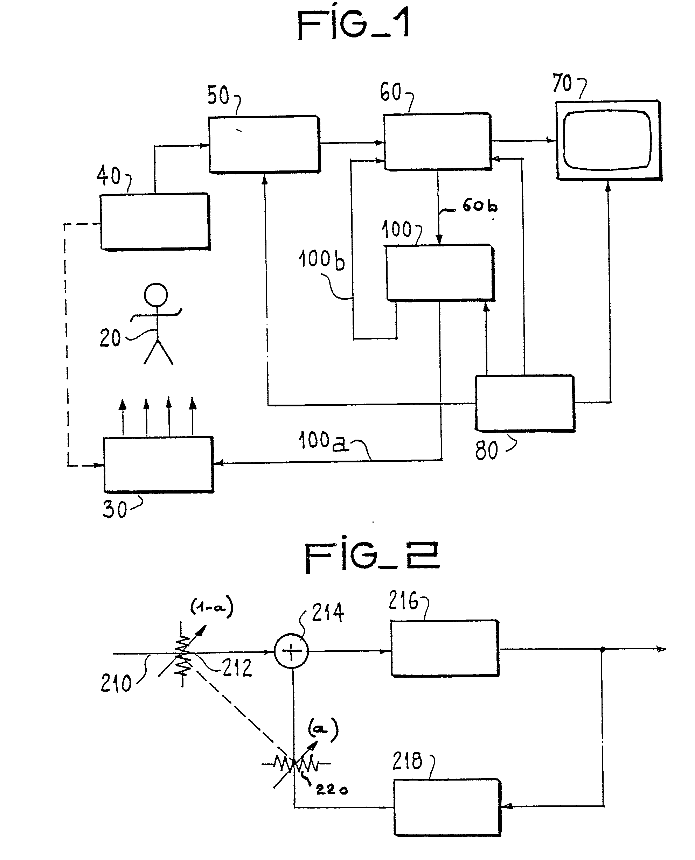

En se référant à la figure 1, on voit le schéma par blocs d'un appareil 10 permettant de projeter l'image de la structure interne d'un corps 20. L'appareil 10 comprend, de manière classique, une source de radiations 30, un détecteur 40 et un générateur de signaux vidéo 50. La combinaison du détecteur et du générateur vidéo peut comprendre, par exemple, un amplificateur d'images associé à une caméra de télévision. Le signal vidéo du générateur 50 est appliqué à un montage de réduction de bruits 60, qui peut être un réducteur de bruits digital ou numérique du type décrit dans le brevet américain n° 4 064 530, cité ici simplement à titre indicatif. Les signaux vidéo apparaissant à la sortie du montage réducteur de bruits 60 sont appliqués à un dispositif de visualisation ou à un "display" 70. Le montage 60 délivre également un signal de sortie indicateur de mouvement, signal qui est appliqué au circuit de traitement 100. L'une des sorties du circuit de traitement 100 est reliée au réglage d'intensité de la source de radiations 30. Une seconde sortie du circuit de traitement 100 est ramenée au montage de réduction de bruits 60 et peut être utilisée, comme il est décrit ci-après, pour le réglage de ce montage. Un module de chronologie ou de synchronisation 80, qui comprend l'horloge de base et qui délivre aussi les signaux de synchronisation d'une manière classique, est représenté comme étant relié au générateur vidéo 50, au montage de réduction de bruits 60, au display 70 et au circuit de traitement 100.

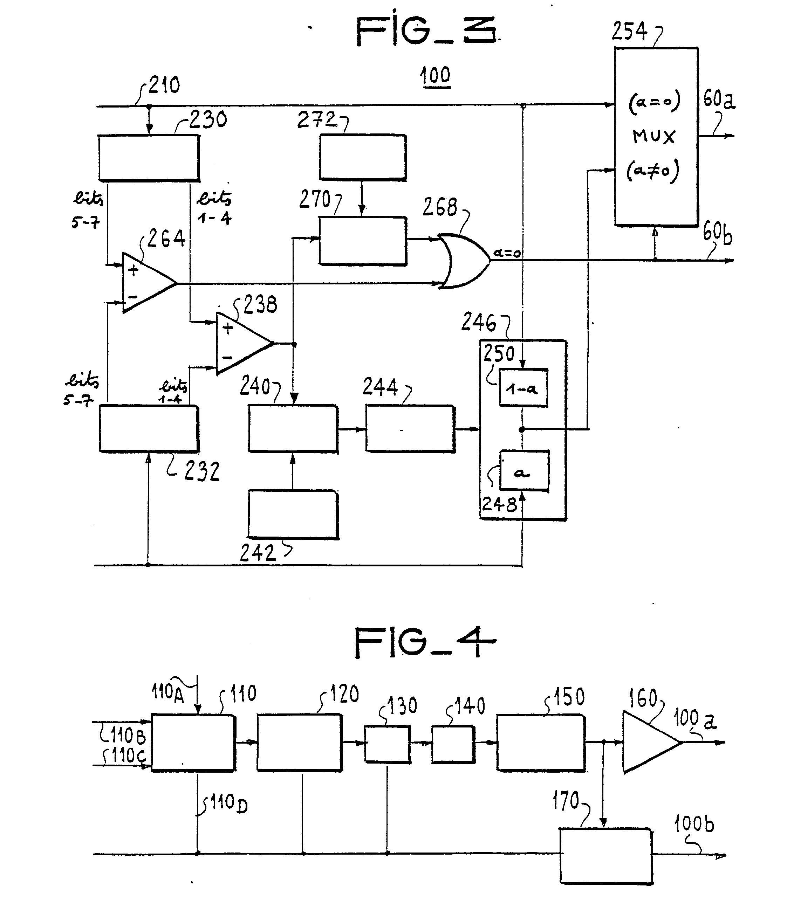

Pour faciliter la compréhension de l'invention, on se propose de décrire ci-après en regard des figures 2 et 3, d'une manière simplifiée, la structure du réducteur de bruits digital 60. La figure 2 illustre, d'une manière générale, le fonctionnement du réducteur de bruits digital qui fait l'objet du brevet américain n° 4 064 530. Un signal d'entrée vidéo, arrivant par une ligne 210, qui a été normalement digitalisé, c'est à dire, transformé en impulsions binaires, (par des moyens non représentés) est appliqué, à travers un atténuateur variable 212, à l'une des bornes d'un circuit d'addition 214. Le signal de sortie du circuit d'addition 214 est appliqué à un circuit à retard 216 qui est calculé pour produire un retard correspondant à la durée d'une trame. Le signal de sortie du circuit à retard 216 est appliqué, à travers un inverseur de chrominance 218 et un atténuateur variable 220, à la seconde borne d'entrée du circuit d'addition 214. Les atténuateurs 212 et 220 sont couplés, comme l'indique la ligne de tirets qui les joint, afin d'introduire respectivement les coefficients de transmission "(1-a)" et "a". En d'autres termes, une fraction (1-a) de l'amplitude du signal vidéo incident ou "actuel" est appliquée à l'une des entrées du circuit d'addition 214 et une fraction "a" de l'amplitude du signal vidéo "passé" (ou "différé") en provenance du circuit à retard 216 est appliquée à l'autre borne d'entrée de ce circuit. Il est bien évident que, dans ces conditions, si la valeur du coefficient "a" varie, augmente, par exemple, la fraction du signal passé appliquée au circuit d'addition augmente, et la proportion du signal vidéo actuel appliqué au circuit d'addition diminue. Inversement, si "a" vient à diminuer, par exemple, une plus grande fraction du signal actuel et une plus petite fraction du signal différé sont appliquées au circuit d'addition. Le montage représenté sur la figure 2 s'appelle une "mémoire infinie" dans laquelle une fraction de l'amplitude de la somme des trames antérieures ou précédentes est additionnée à une fraction de l'amplitude du signal vidéo incident ou actuel, l'importance relative d'un signal de n trames étant déterminée par la valeur de "a". Le principe de base du fonctionnement de ce réducteur de bruits digital est le suivant: en l'absence d'un mouvement entre les trames successives, les signaux vidéo représentant ces trames successives sont identiques en ce qui concerne leur contenu d'informations, et seule la quantité de bruits que chacune d'elles contient sera différente. Lorsqu'on additionne une multitude de tels signaux identiques, comme il vient d'être décrit, le résultat est un signal identique à l'un quelconque des signaux additionnés et ayant la même grandeur que le signal incident atténué, grâce au fait que la comme de "a" et (1-a) est toujours égale à l'unité. Par contre, les bruits aléatoires présentes dans le signal ont tendance à s'annuler. L'amélioration de rapport signalbruit qui peut être obtenue avec ce type de filtre récurrent est:

$(1 + a)/(1 - a).$

Le signal de sortie vidéo dont le bruit a été atténué peut être prélevé à la sortie du circuit à retard 216, comme représenté, ou bien à celle du circuit d'addition 214 ou de l'inverseur de chrominance 218. Une description du fonctionnement de l'inverseur 218 n'est pas nécessaire à la bonne compréhension de la présente invention et pour plus d'informations le lecteur peut, le cas échéant, se référer au brevet américain mentionné plus haut n° 4 064 530. Il est bien évident, par ailleurs, que dans le cas d'un système en noir et blanc, l'inverseur de chrominance est inutile.

Le coefficient "a" (et par conséquent (1-a) est déterminé, dans le réducteur de bruits digital, en détectant le mouvement entre les informations précédentes conservées et les signaux vidéo actuels, cette opération étant exécutée pour chaque élément d'image représenté par le signal vidéo. La figure 3 est un schéma par blocs du montage qui remplit la fonction du circuit d'addition 214 et des atténuateurs 212 et 220 de la figure 2, tout en détectant aussi la quantité de mouvement de chaque élément d'image afin de régler les coefficients d'atténuation. Sur la figure 3, le signal vidéo "actuel" reçu à la ligne 210 est un signal codé binaire de huit bits (codé par des moyens non représentés) qui est appliqué à un registre à huit bits 230. Les signaux vidéo différés, reçus à travers l'inverseur de crominance 218 (figure 2), sont appliqués à un autre registre à huit bits 232. Afin de détecter la quantité de "mouvement" de l'élément d'image traité, on compare les signaux vidéo antérieurs ou différés avec les signaux vidéo actuels ou incidents. Une première étape de cette comparaison consiste à appliquer respectivement les quatre bits les moins significatifs du signal vidéo actuel aux bornes d'entrée négative et positive d'un amplificateur différentiel 238. En supposant que les huit bits qui représentent le niveau vidéo de l'élément d'image en train d'être considéré sont désignés bit 0 (pour le moins significatif) à bit 7 (pour le plus significatif), les quatre bits auxquels il a été fait référence peuvent être les bits 1—4. Les signaux de sortie de l'amplificateur différentiel 238 sont appliqués à un comparateur 240 qui compare les signaux de sortie de l'amplificateur différentiel avec un nombre de référence d'intégration (indiqué en 242). Les signaux de sortie du comparateur d'intégration 240 sont appliqués à un décodeur de coefficient 244 qui a pour fonction d'engendrer le coefficient "a" qui, comme il a été indiqué plus haut, détermine la proportion de l'amplitude du signal vidéo précédent qui doit être additionné au signal vidéo actuel. Le décodeur 244 produit, selon la valeur de la différence particulière produit par le comparateur d'intégration 240, l'une trois valeurs "a", à savoir: les fractions 1/4, 1/2 ou 3/4. Dans le cas d'une différence relativement grande à la sortie du comparateur d'intégration 240, indiquant le plus grand mouvement tolérable (c'est-à-dire, le plus grand mouvement pour lequel une réduction de bruit est encore réalisée), le coefficient "a" a pour valeur 1/4. Quand la différence à la sortie du comparateur 240 est plus petite, indiquant un moindre mouvement entre les signaux vidéo antérieur et actuel, le décodeur produit un coefficient "a" ayant pour valeur 1/2. Quand le mouvement actuel détecté est encore plus petit, un coefficient ayant pour valeur 3/4 est produit. Le coefficient "a", sous la forme d'un mot binaire, est appliqué au circuit d'addition 246 qui comprend les éléments 248 et 250, marqués respectivement "a" et "(1-a)", pour indiquer les fractions respectives de l'amplitude des signaux vidéo précédents et actuels qui sont additionnés. Le signal vidéo différé est appliqué à l'élément 248, tandis que le signal vidéo actuel est appliqué à l'élément 240. La somme des fractions respectives des amplitudes de ces signaux est appliquée par la ligne 252 à l'une des entrées d'un multiplexeur 254 qui transmet un signal vidéo dont le bruit a été atténué à la ligne 60a dans les cas où la valeur du coefficient "a" est différente de zéro.

Pour traiter les cas dans lesquels une grande différence existe entre les signaux actuel et antérieur, comme l'indique les bits plus significatifs, on procède à une seconde comparaison, notamment, entre les trois bits les plus significatifs du signal vidéo différé et les trois bits les plus significatifs du signal vidéo actuel. Plus précisément, on applique respectivement les trois bits les plus significatifs du signal vidéo précédent et ceux du signal vidéo actuel aux bornes d'entrée négative et positive d'un second amplificateur différentiel 264. Quand l'amplificateur 264 décèle une différence entre les trois bits les plus signnificatifs du signal vidéo antérieur et ceux du signal vidéo actuel (indiquant par là qu'il y a un "mouvement" sensible dans l'élément d'image considéré, mouvement qui dépasse le seuil admissible), un signal est appliqué à l'une des entrées d'un circuit OU 268 qui, de son côté, applique au multiplexeur 254 un signal qui provoque effectivement le retour à zéro du coefficient "a". Ceci revient à dire que dans le cas où le mouvement détecté dépasse une limite ou un seuil prédéterminé, aucun des signaux vidéo différés n'est additionné au signal actuel, lequel est, au contraire transmis seul à la ligne de sortie 60a. Cette situation, que l'on peut qualifiée de "contournement", puisque la fonction de réduction de bruits est effectivement "contournée", et que seul le signal vidéo actuel ou incident est transmis à la sortie du réducteur de bruits.

Un autre circuit est également prévu pour ramener la valeur du coefficient "a" à zéro. Plus précisément, les signaux de sortie de l'amplificateur différentiel 238 sont également appliques à un comparateur dit de "contournement" 270 dans lequel il est comparé à un nombre (indiqué en 272), représentant le seuil de contournement et qui normalement a une valeur plus grande que le nombre de référence d'intégration. Quand la différence entre le signal de sortie de l'amplificateur différentiel 238 dépasse le nombre représentant le seuil de contournement, le comparateur 270 produit un signal qui est appliqué à la seconde entrée du circuit OU 268, lequel produit ainsi un signal qui, de son côté, est appliqué au multiplexeur 254 afin de provoquer le retour du coefficient "a" à zéro. Ainsi, il ressort de ce qui précède que le coefficient "a" revient à zéro, en provoquant ainsi l'application du signal vidéo actuel seul à la ligne de sortie 60a quand (1) il y a une différence entre les trois bits les plus significatifs des signaux vidéo différé et actuel ou (2) quand la différence entre les quatre bits les moins significatifs des signaux vidéo différé et actuel dépasse un certain nombre présélectionné désignant le seuil de contournement. En l'absence de ces conditions de contournement, le coefficient "a" est déterminé comme il a été expliqué plus haut.

En considérant la figure 4, on voit le schéma par blocs d'un mode de réalisation des circuits de traitement 100 de la figure 1. Ces circuits de traitement comprennent un diviseur programmable 110 qui peut, par exemple, être le modèle SN 7497 ou SN 74167 fabriqués par la société par la société américaine Texas Instruments Corp. Le diviseur de l'opération de division est réglable au moyen de commutateurs pouvant être actionnés par l'opérateur, par l'intermédiaire de lignes 110A. L'opérateur sélectionne ainsi un nombre d'entrée M qui est utilisé comme dénominateur dans la division laquelle, comme on le verra, règle la sensibilité dans le présent mode de réalisation. Le diviseur programmable 110 reçoit comme signal d'entrée de la ligne 60B le signal de "contournement" du réducteur de bruits digital 60 (de la figure 3). Comme il a été décrit ci-dessus, le signal de contournement est "actif" quand un mouvement dépassant un certain seuil est détecté dans l'élément d'image particulier de la trame vidéo. Lorsque le mouvement détecté dans l'élément d'image actuel est inférieur au seuil préétabli du réducteur de bruits digital 60, le signal de contournement est "inactif". Le diviseur programmable 110 reçoit aussi, par une ligne 110C le signal d'horloge de base et par une ligne de remise à zéro 110D, un signal à la cadence de la trame. Ces signaux sont fournis par les circuits de chronologie ou de synchronisation 80 (figure 1). Le signal d'horloge de base comprend des impulsions d'horloge qui apparaîssent à la cadence des éléments d'image individuels de la trame vidéo. Le diviseur programmmable 110 engendre un signal de sortie chaque fois que le signal de contournement est "actif" pendant, au moins, un nombre M d'impulsions d'horloge, où M est choisi par l'opérateur.

Le signal de sortie du diviseur programmable 110 est relié à un compteur digital ou binaire 120. Ce compteur reçoit aussi par sa ligne de remise à zéro, les signaux émis à la cadence des trames du circuit de synchronisation 80. A la fin d'une trame vidéo, le compteur 120 contient un total qui est sensiblement égal au nombre d'éléments vidéo qui, au dernier degré prescrit de mouvement ont été trouvés être présents (désignés E) divisés par le réglage choisi par l'opérateur, M, c'est à dire, qu'il contient un total E/M. Quand le signal de remise à zéro apparaît, à la fin de la trame, le contenu du compteur est transféré à un verrou 130 qui est aussi synchronisé à la cadence des trames. La sortie du verrou 130 est reliée à un convertisseur numérique/analogique 140 dont la sortie est, de son côté, reliée à un filtre 150 ayant une constante de temps réglable. La sortie du filtre 150 est reliée, à travers un amplificateur-tampon 160, à la ligne 100a qui, de son côté, est reliée à la commande de réglage d'intensité de la source de radiations 30 (figure 1). La sortie du filtre variable 150 est aussi reliée à un convertisseur analogique/numérique 170 qui est activé par des signaux ayant la cadence des trames. Les signaux de sortie du convertisseur analogique/numérique 170 apparaîssant sur la ligne 100b, sont appliqués au réducteur de bruits digital 60 et peuvent être utilisés, par exemple, comme le nombre représentant le seuil de contournement 272 ou comme le nombre de référence d'intégration 242 (figure 3).

En fonctionnement, la quantité totale de mouvement que présenté une trame d'informations (ou une succession de trames, déterminée, par exemple, par la constante de temps du circuit de filtrage 150) est utilisée pour régler l'intensité de la source de rayons X et, au besoin, les caractéristiques de rétro-action du réducteur de bruits digital. En particulier, quand le signal de contournement est actif pendant une partie appréciable d'une trame, la grandeur du signal de sortie du compteur 120 est relativement élevée à la fin de la trame. Un certain nombre de ces trames (nombre qui dépend de la constante de temps du filtre 150) a pour résultat un signal de sortie relativement élevé sur la ligne 100a. Ceci indique un mouvement général appréciable du corps en train d'être représenté et signifie que la fonction de réduction de bruits est minimale sur certaines parties de l'image du corps (comme il découle de la description ci-dessus du système de réduction de bruits 60). En conséquence, pour maintenir le rapport signal/bruit le plus élevé possible dans l'image, un grand signal présent sur la ligne 100a ne produit aucune atténuation de la source de rayons X. Inversement, un signal relativement petit sur la ligne 100a indique un mouvement global relativement faible des diverses parties du corps en train d'être représentées. Etant donné que ceci se traduit par une atténuation sensible des bruits par le système de réduction de bruits sur la majeure partie du corps en train d'être représenté, (comme il a été expliqué ci-dessus), le petit signal de la ligne 100a produit une atténuation de la source de radiations, puisqu'une source moins intense est nécessaire pour obtenir le rapport signal/bruit voulu. Ainsi, on voit que le signal de la ligne 100a est appliqué en rapport inverse à la commande d'atténuation de la source de radiations 30.

En ce qui concerne le signal de sortie 100b, une accumulation de trames ayant un mouvement appréciable est utilisée pour réduire effectivement le coefficient de rétro-action du système de réduction de bruits en présence d'un mouvement général ou global relativement important du corps dans le champ de l'image. L'inverse est également vrai en ce qu'un mouvement général relativement faible du corps en train d'être représenté se traduit par une augmentation du coefficient de rétro-action du système de réduction de bruits.

La constante de temps du filtre variable 150 détermine le nombre des trames contribuant à la détermination des signaux 100a et 100b. Il est clair que, le cas échéant, des constantes de temps différentes pourraient être utilisées, par exemple, en prévoyant plusieurs filtres séparés à la sortie du convertisseur numérique/analogique 140. On pourrait également, le cas échéant, relier la sortie du convertisseur analogique/numérique 170 à la ligne 100b par l'intermédiaire d'une mémoire fixe ou "morte" (non représentée) servant à assurer une commande programmée de la fonction de rétro-action du réducteur de bruits.

## Revendications

1. Dispositif pour visualiser un corps éclairé par une source de radiation réglable (30) comportant des moyens (40) pour détecter les radiations reçues par le corps (20); des moyens (50) pour convertir les radiations ainsi détectées en un signal vidéo électronique, caractérisé en ce qu'il comporte en outre: un montage de réduction de bruit (60) associé à des moyens de visualisation (70) et incluant des moyens pour conserver ou mémoriser des signaux vidéo, des moyens de détection de mouvement répondant aux signaux vidéo actuels et aux signaux vidéo antérieurs en engendrant des signaux indicateurs de mouvements en fonction des différences entre les niveaux desdits signaux vidéo actuels et antérieurs à certaines positions élémentaires de la trame vidéo et des moyens pour combiner des fractions des signaux vidéo actuels et des signaux vidéo antérieurs, ces fractions étant fonction desdits signaux indicateurs de mouvement, de montage de réduction de bruit (60) coopérant avec un circuit de traitement (100), qui en réponse auxdits signaux indicateurs de mouvement et engendre, en fonction de ceux-ci un premier et un second signal de sortie (100a) et (100b) destinés respectivement à être appliqués à la source de radiation (30) et au montage de réduction de bruit (6); un circuit (80) assurant la synchronisation entre le montage (60), le circuit de traitement (100) et les moyens de visualisation (70).

2. Dispositif selon la revendication 1, caractérisé en ce que le circuit de traitement (100) comprend un diviseur programmable (110) relié à un compteur (120), lui-même relié à travers un verrou (130), et un premier convertisseur numérique/analogique (140) à un filtre (150) ayant une constante de temps réglable dont la sortie est reliée d'une part à travers un amplificateur tampon (160) à la ligne (100a), d'autre part à un second convertisseur analogique/numérique (170) fournissant les signaux (100b), le diviseur (110), le compteur (120), le verrou (130) et le second convertisseur (170) étant synchronisé à la cadence des trames.

3. Dispositif selon l'une des revendications précédentes, caractérisé en ce que lesdites radiations sont des rayons X.

4. Procédé pour produire l'image d'un corps selon lequel
on dirige une source de radiation réglable sur le corps; et
on détecte les radiations reçues du corps;
on convertit les radiations ainsi détectées en un signal vidéo électronique; caractérisé en ce qu'on engendre un signal indicateur de mouvement en fonction de la différence entre les niveaux des signaux vidéo actuels et antérieurs à certaines positions élémentaires d'une trame dudit signal vidéo;
on engendre un signal de commande ou de réglage d'intensité en fonction du signal indicateur de mouvement;
on applique ledit signal de réglage à ladite source de radiations afin de régler son intensité; et,
on visualise ledit signal vidéo.

5. Procédé selon la revendication 4, caractérisé en ce qu'on engendre ledit signal de commande ou de réglage en fonction d'un certain nombre de signaux indicateurs de mouvement accumulés.

6. Procédé selon la revendication 4, caractérisé en ce qu'on engendre ledit signal de commande ou de réglage en fonction des signaux indicateurs de mouvement accumulés pendant une période s'étendant, au moins, sur une trame vidéo.

7. Procédé selon la revendication 4, caractérisé en ce que ledit signal de commande ou de réglage est calculé pour atténuer l'intensité de ladite source de radiations dans un rapport inverse à celle des signaux indicateurs de mouvement accumulés.

8. Procédé selon l'une des revendications 4 à 7, caractérisé en ce que lesdites radiations sont des rayons X.

## Patentansprüche

1. Vorrichtung zur Sichtdarstellung eines Körpers, der durch eine Quelle einstellbarer Strahlung (30) beleuchtet ist, mit einer Einrichtung (40) zur Detektion der von dem Körper (20) empfangenen Strahlung und einer Einrichtung (50) zur Umsetzung der so detektierten Strahlung in ein elektronisches Videosignal, dadurch gekennzeichnet, daß sie ferner enthält: Eine Rauschunterdrückungsschaltung (60), die Mitteln zur Sichtdarstellung (70) zugeordnet ist und versehen ist mit einer Einrichtung zur Bewahrung oder Speicherung der Videosignale, einer Einrichtung zur Bewegungsdetektion, welche auf die aktuellen sowie auf die früheren Videosignale anspricht und Bewegungsanzeigesignale in Abhangigkeit von den Differenzen zwischen den Pegeln der aktuellen Videosignale und der früheren Videosignale an bestimmten elementaren Positionen des Videobildes erzeugt, sowie mit einer Einrichtung zum Kombinieren von Bruchteilen der aktuellen Videosignale mit den früheren Videosignalen, wobei diese Bruchteile eine Funktion der genannten Bewegungsanzeigesignale sind, wobei ferner diese Rauschunterdrückungsschaltung (60) zusammenwirkt mit einer Verarbeitungsschaltung (100), die ansprechend auf die Bewegungsanzeigesignale und in Abhängigkeit von diesen ein erstes und ein zweites Ausgangssignal (100a) und (100b) erzeugt, die zum Anlegen an die Strahlungsquelle (30) bzw. an die Rauschunterdrückungsschaltung (60) bestimmt sind, und wobei ein Schaltungsreis (80) die Synchronisation zwischen der Schaltung (60), der Verarbeitungsschaltung (100) und den Sichtdarstellungsmitteln (70) gewährleistet.

2. Vorrichtung nach Anspruch 1, dadurch gekennzeichnet, daß die Verarbeitungsschaltung (100) einen programmierbaren Teiler (110) umfaßt, der mit einem Zähler (120) verbunden ist, welcher seinerseits über eine Einrastschaltung (130) und einen ersten Digital/Analog-Umsetzer (140) mit einem Filter (150) verbunden ist, das eine einstellbare Zeitkonstante aufweist und dessen Ausgang einerseits über einen Pufferverstärker (160) mit der Leitung (100a) und andrerseits mit einem zweiten Analog/Digilal-Umsetzer (170) verbunden ist, welcher die Signale (100b) liefert, wobei der Teiler (110), der Zähler (120), die Einrastschaltung (130) und der zweite Umsetzer (170) mit der Bildfrequenz synchronisiert sind.

3. Vorrichtung nach einem der Vorstehenden Ansprüche, dadurch gekennzeichnet, daß die genannten Strahlungen Röntgenstrahlen sind.

4. Verfahren zur Erzeugung des Bildes von einem Körper, bei welchem eine einstellbare Strahlungsquelle auf den Körper gerichtet wird und die von dem Körper empfangenen Strahlungen detektiert werden sowie die so detektierten Strahlungen in ein elektronisches Videosignal umgesetzt werden, dadurch gekennzeichnet, daß ein Bewegungsanzeigesignal in Abhängigkeit von der Differenz zwischen den Pegeln der aktuellen und der früheren Videosignale an bestimmten elementaren Positionen eines Bildes des Videosignals erzeugt wird, ein Steuer- oder Intensitätseinstellsignal in Abhängigkeit von dem Bewegungsanzeigesignal erzeugt wird, dieses Einstellsignal an die genannte Strahlungsquelle angelegt wird, um ihre Intensität zu regeln, und das Videosignal sichtbar gemacht wird.

5. Verfahren nach Anspruch 4, dadurch gekennzeichnet, daß das genannte Steuer- oder Einstellsignal in Abhängigkeit von einer bestimmten Anzahl von kumulierten Bewegungsanzeigesignalen erzeugt wird.

6. Verfahren nach Anspruch 4, dadurch gekennzeichnet, daß das genannte Steuer- oder Einstellsignal in Abhängigkeit von Bewegungsanzeigesignalen erzeugt wird, die während einer Periode kumuliert werden, die sich wenigstens über ein Videobild erstreckt.

7. Verfahren nach Anspruch 4, dadurch gekennzeichnet, daß das genannte Steuer- oder Einstellsignal so berechnet wird, daß die Intensität der Strahlungsquelle im umgekehrten Verhältnis zu der der kumulierten Bewegungsanzeigesignale gedämpft wird.

8. Verfahren nach einem der Ansprüche 4 bis 7, dadurch gekennzeichnet, daß die genannten Strahlungen Röntgenstrahlen sind.

**Claims**

1. Device for the visual representation of a body illuminated by a source of adjustable radiation (30) comprising means (40) for detecting the radiations received by the body (20); means (50) for converting the radiations thus detected to an electronic video signal, characterized in that it further comprises: a noise suppression circuit (60) associated with means for visual representation (70) and including means for conserving or storing the video signals, means for movement detection responsive to the actual video signals and to the previous video signals and generating movement indicating signals in dependence upon differences between the levels of said actual and previous video signals at predetermined elementary positions of the video picture, and means for combining fractions of the actual video signals and the previous video signals, said fractions being a function of said movement indicating signals, said noise suppression circuit (60) co-operating with a processing circuit (100) which in response to said movement indicating signals and as a function of the latter generates a first and a second output signal (100a) and (100b) intended respectively to be applied to the radiation source (30) and to the noise suppression circuit (60); a circuit (80) ensuring the synchronization between the circuit (60), the processing circuit (100) and the visual representation means (70).

2. Device according to claim 1, characterized in that the processing circuit (100) comprises a programmable divider (110) connected to a counter (120) which is connected in turn via a latching circuit (130) and a first digital/analog converter (140) to a filter (150) which has an adjustable time constant and the output of which is connected on the one hand via a buffer amplifier (160) to the line (100a) and on the other to a second analog/digital converter (170) furnishing the signals (100b), the divider (110), the counter (120), the latching circuit (130) and the second converter (170) being synchronized with the picture frequency.

3. Device according to one of the preceding claims, characterized in that the said radiations are X-rays.

4. Method for producing he image of a body according to which

an adjustable radiation source is directed onto the body; and

the radiations received by the body are detected;

the radiations thus detected are converted to an electronic video signal; characterized in that a movement indicating signal is generated in dependence upon the difference between the levels of the actual and previous video signals at certain elementary positions of a picture of said video signal;

a control or intensity adjustment signal is generated in dependence upon the movement indicating signal;

said adjustment signal is applied to said radiation source in order to regulate the intensity thereof; and

said video signal is rendered visible.

5. Method according to claim 4, characterized in that said control or adjustment signal is generated in dependence upon a certain number of accumulated movement indicating signals.

6. Method according to claim 4, characterized in that said control or adjustment signal is generated in dependence upon movement indicating signals accumulated during a period extending at least over a video picture.

7. Method according to claim 4, characterized in that said control or adjustment signal is calculated to attenuate the intensity of said radiation source in a converse ratio to that of the accumulated movement indicating signals.

8. Method according to one of claims 4 to 7, characterized in that said radiations are X-rays.

# FIG_1

# FIG_2

# FIG_3

## 100

# FIG_4

2